Europäisches Patentamt

European Patent Office

Office européen des brevets

(11) Veröffentlichungsnummer: 0 193 489

A2

(12) **EUROPÄISCHE PATENTANMELDUNG**

(21) Anmeldenummer: 86730011.3

(51) Int. Cl.⁴: **B 65 G 17/12**

(22) Anmeldetag: 22.01.86

(30) Priorität: 25.01.85 DE 8502312 U

(43) Veröffentlichungstag der Anmeldung:
03.09.86 Patentblatt 86/36

(84) Benannte Vertragsstaaten:
AT DE GB IT

(71) Anmelder: RUD-Kettenfabrik Rieger & Dietz GmbH u.
Co.
Friedensinsel
D-7080 Aalen 1(DE)

(72) Erfinder: Zenker, Hartwig
Waldhäuser Strasse 64
D-7080 Aalen-Unterkochen(DE)

(74) Vertreter: Böning, Manfred, Dr. Ing. et al,
Patentanwälte Dipl.-Ing. Dieter Jander Dr. Ing. Manfred
Böning Kurfürstendamm 66
D-1000 Berlin 15(DE)

(54) Kettenförderer.

(57) Bei einem Kettenförderer mit mindestens einem Kettenstrang (1) dienen zur Verbindung von Kettengliedern (3) mit Förderelementen (4) U-förmige Anschlußbügel (5), die jeweils einen Schenkel (6) eines senkrecht zur Kettenradachse orientierten Kettengliedes (3) umfassen. Um eine sichere und feste Verbindung zu gewährleisten, ruht der Schenkel (6) des vom Anschlußbügel (5) umfaßten Kettengliedes (3) in einem am Förderelement (4) angeordneten ihn partiell umfassenden Stütz- und Führungsbett.

Fig.1

## Kettenförderer

Die Erfindung betrifft einen Kettenförderer mit mindestens einem durch ein Zahnkettenrad antreibbaren Kettenstrang aus ovalen Kettengliedern, insbesondere Rundstahlgliedern, bei dem am jeweiligen Kettenstrang mittels jeweils nur eines an seinen beiden Enden mit Gewinde versehenen U-förmigen Anschlußbügels Förderelemente, insbesondere Becher, angeschraubt sind.

Bekannt sind Kettenförderer der vorstehenden Art, bei denen in jeden Anschlußbügel die Endglieder zweier durch den jeweiligen Anschlußbügel miteinander verbundener Kettenstrangabschnitte eingehängt sind (DIN 5699). Die bekannten Kettenförderer vermögen insofern nicht zu befriedigen, als bei ihnen die Anschlußbügel in den Zugverband der nicht durchgehenden Förderketten einbezogen und folglich erheblichen sowohl statischen als auch dynamischen Belastungen ausgesetzt sind. Da die Anschlußbügel Teile des Zugverbandes bilden, müssen sie wie die Kettenglieder zur Erzielung einer ausreichenden Verschleißfestigkeit gehärtet sein. Aufgrund der von Haus aus offenen Bügelform bringt die Härtung der Anschlußbügel eine Dauerbruchgefahr mit sich, die man zumindest teilweise dadurch zu kompensieren versucht, daß man die Bügelquerschnitte gegenüber den Gliedquerschnitten spürbar erhöht. Dies wiederum hat zur Folge, daß das Spiel zwischen den Anschlußbügeln und den in sie eingehängten Kettengliedern vermindert wird und die Gelenkigkeit der Förderketten im Bereich der Anschlußstellen eine Beeinträchtigung erfährt. Als nach-

- 2 -

teilig erweist sich bei den bekannten Kettenförderern außerdem der Umstand, daß die Lage der Förderelemente durch die Länge der durch die Anschlußbügel miteinander verbundenen Kettenstrangabschnitte vorbestimmt ist.

Ein als Becherwerk ausgebildeter Kettenförderer, bei dem die Förderelemente ebenfalls mit nur jeweils einem Kettenglied der zu ihrem Antrieb dienenden Kettensträngen verbunden sind (sogenannte "Eingliedbefestigung"), ist außerdem aus der AT-PS 262 880 bekannt. In diesem Fall sind zum Anschluß der Förderelemente mit angeschweißten Gewindebolzen versehene ovale Kettenglieder eines durchgehenden Kettenstranges vorgesehen. Der Vorteil dieser Lösung gegenüber der zuerst beschriebenen Konstruktion besteht darin, daß die Kettenstränge nicht durch Anschlußbügel unterbrochen sind. Auch in diesem Fall ist eine freie Wahl der Anbringungsorte der Förderelemente an den Kettensträngen und insbesondere eine Veränderung der Becherteilung indes nicht möglich, und als nachteilig erweist sich zudem eine Festigkeitseinbuße der Anschlußkettenglieder im Bereich der Anschweißstellen der Gewindebolzen.

Bekannt ist schließlich aus dem DE-GM 18 82 982 ein Becherwerk, bei dem die Becher an jeweils zwei aufeinanderfolgenden, vertikal zur Kettenradachse orientierten Kettengliedern durchgehender Kettensträngen mit Hilfe von U-förmigen Anschlußbügeln befestigt sind, die jeweils einen Kettengliedschenkel umfassen. Der Nachteil eines solchen Kettenförderers besteht darin,

0193489

- 3 -

daß einerseits die Zahl der zur Befestigung der Förderelemente erforderlichen Anschlußbügel doppelt so
groß ist wie bei einer Eingliedbefestigung und andererseits beim Passieren der Kettenräder erhebliche,
den Verschleiß fördernde Relativbewegungen zwischen
den Anschlußbügeln und den Kettengliedern in Kauf genommen werden müssen.

Der Erfindung liegt die Aufgabe zugrunde, einen Kettenförderer der zuerst genannten Art derart weiter zu
entwickeln, daß die Anschlußbügel lediglich die von
den Förderelementen herrührenden Kräfte bzw. Momente
auf einen durchgehenden Kettenstrang aus normalen Ovalgliedern zu übertragen haben, wobei ein Anschluß der
Förderelemente an beliebigen Stellen des Kettenstranges
möglich und eine spielfreie, hochfeste und sichere
Verbindung zwischen dem jeweiligen Kettenglied und dem
mit diesem über den Anschlußbügel verbundenen Förderelement gewährleistet ist.

Diese Aufgabe wird erfindungsgemäß dadurch gelöst, daß
die Anschlußbügel jeweils einen Schenkel eines senkrecht
zur Kettenradachse orientierten Kettengliedes eines
durchgehenden Kettenstranges umfassen und die von den
Anschlußbügeln umfaßten Schenkel in jeweils einem am
Förderelement angeordneten Stütz- und Führungsbett
ruhen.

Die erfindungsgemäße Ausbildung eines Kettenförderers
ermöglicht die Anbringung und das Auswechseln von Förderelementen an beliebigen Stellen auch gespannter, durchgehender aus normalen ovalen Kettengliedern gebildeter Kettenstränge, deren Gelenkigkeit im Bereich der Anschlußstellen nicht beeinträchtigt ist, wobei die ungeschmälerte Gelenkigkeit der Kettenstränge bei Mehrstrangförderern im Falle eines eventuell auftretenden begrenzten Kettenstrangversatzes störende Verspannungen der Kettenstränge ausschließt. Durch die Verwendung eines Stütz- und Führungsbettes erfolgt eine lagemäßig einwandfreie Zuordnung der Förderelemente zu den mit ihnen verbundenen Kettengliedern. Außerdem werden durch das Stütz- und Führungsbett verschleißfördernde Relativbewegungen zwischen dem Kettenglied und dem Förderelement unterbunden.

Weitere Einzelheiten und Merkmale der Erfindung ergeben sich aus den Unteransprüchen und der nachfolgenden Beschreibung eines in der beigefügten Zeichnung dargestellten Ausführungsbeispieles. Es zeigen:

Fig. 1 teilweise im Schnitt die Seitenansicht der Anschlußstelle eines Förderelementes an einen Kettenstrang eines Kettenförderers;

Fig. 2 teilweise im Schnitt die Stirnansicht einer Anschlußstelle eines Förderelementes an einen Kettenstrang eines Kettenförderers;

Fig. 3 die Draufsicht auf ein ein Stütz- und Führungsbett für ein Kettenglied des Kettenförderers gemäß Fig. 1 und 2 bildendes Bauteil;

- 5 -

Fig. 4 die Strinansicht des Bauteiles gemäß Fig. 3;

Fig. 5 einen Schnitt längs der Linie V-V in Fig. 3;

Fig. 6 einen Schnitt längs der Linie VI-VI in Fig. 3;

Fig. 7 einen Schnitt längs der Linie VII-VII in Fig. 3
    und

Fig. 8 einen der Fig. 7 entsprechenden Schnitt durch
    ein leicht modifiziertes Bauteil gemäß Fig. 3.

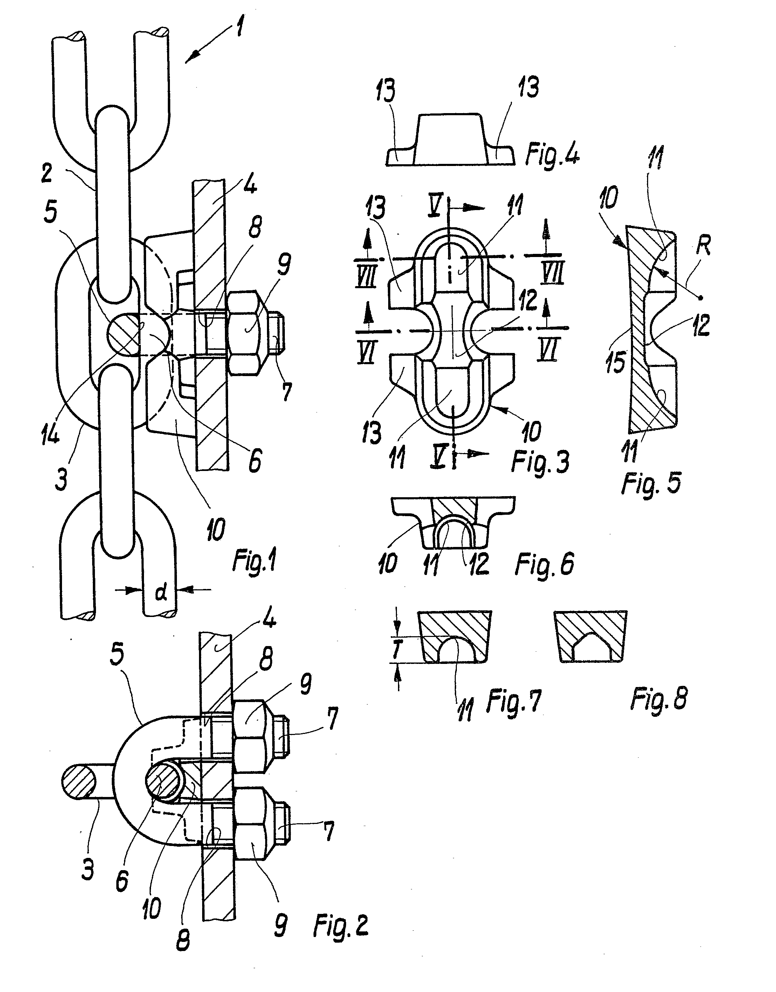

In Fig. 1 ist mit 1 allgemein ein Teil eines durchgehenden Kettenstranges eines Kettenförderers bezeichnet.
Der Kettenstrang 1 besteht aus normalen ovalen Kettengliedern 2, welche parallel zur Achse eines nicht dargestellten Kettenrades orientiert sind und aus Kettengliedern 3, welche senkrecht zur Achse dieses Kettenrades stehen. In der Praxis werden die Glieder 2, in
die die Zähne des Kettenrades eingreifen, regelmäßig
als Horizontalglieder und die Glieder 3 regelmäßig als
Vertikalglieder bezeichnet.

An bestimmten Kettengliedern 3 ist jeweils ein Förderelement 4 befestigt, das bei Ausbildung des Kettenförderers als Doppelstrangförderer vorzugsweise von
einem Becher gebildet wird.

Zur Befestigung des Förderelementes 4 an einem Kettenglied 3 des Kettenstranges dient ein Anschlußbügel 5,
der einen Schenkel 6 des Kettengliedes 3 umschließt.

- 6 -

Die mit Gewinde versehenen Enden 7 des Anschlußbügels
5 ragen durch Bohrungen 8 des Förderelementes 4 und
sind an der dem Kettenstrang 1 abgewandten Seite des
Förderelementes 4 durch Muttern 9 gesichert. Zwischen
dem Förderelement 4 und dem Kettenglied 3 ist lösbar
ein Bauteil 10 angeordnet, dessen Aufbau sich aus den
Fig. 4 - 7 ergibt. Das Bauteil 10 formt ein Stütz- und
Führungsbett 11, dessen Tiefe T vorzugsweise mindestens
gleich der halben Gliedstärke d/2 und höchstens gleich
der vollen Gliedstärke d des Schenkels 6 des Kettengliedes ist. Um eine gute Auflage des Schenkels 6 des Kettengliedes 3 im Stütz- und Führungsbett 11 sicherzustellen, ist dieses im Bereich seiner Mitte mit einer Aussparung 12 versehen. Die Endbereiche des Stütz- und
Führungsbettes 11 haben vorzugsweise beide einen Radius
R, der dem Außenradius der Rundungen des Kettengliedes
3 entspricht. Das Kettenglied 3 liegt mit seinem Schenkel 6 mithin weitgehend gegen Verschiebungen gesichert
im Stütz- und Führungsbett 11. Durch die vergleichsweise
große Tiefe T des Stütz- und Führungsbettes 11 (vgl.
Fig. 7) erfolgt ein selbsttätiges Ausrichten des Kettengliedes 3 zum Förderelement 4.

Zur Justierung des Bauteiles 10 am Förderelement dienen
von seitlichen Vorsprüngen gebildete Führungsgabeln 13.

Um eine gute Auflage zwischen dem Schenkel 6 des Kettengliedes 3 und dem Anschlußbügel 5 sicherzustellen, ist
dieser im Bereich seiner Innenrundung mit einer Abflachung 14 versehen.

- 7 -

Wie man aus Fig. 5 entnehmen kann, ist die dem Förderelement 4 zugewandte Grundfläche 15 des Bauteiles leicht
konkav ausgebildet. Auf diese Weise kommt es beim Festschrauben des Anschlußbügels 5 am Förderelement 4 oder
an einer dessen Rückwand verstärkenden Lasche zu einer
elastischen Deformation des Bauteiles 10. Die Folge ist,
daß die Kraftübertragung durch einen kombinierten Reib-
und Formschluß erfolgt.

Fig. 8 zeigt einen leicht modifizierten, d.h. prismatischen, Stütz- und Führungsbettquerschnitt.

- 8 -

Patentansprüche

1. Kettenförderer mit mindestens einem durch ein Zahnkettenrad antreibbaren Kettenstrang aus ovalen Kettengliedern, insbesondere Rundstahlgliedern, bei dem
am jeweiligen Kettenstrang mittels jeweils nur eines
an seinen beiden Enden mit Gewinde versehenen U-förmigen Anschlußbügels Förderelemente, insbesondere
Becher, angeschraubt sind, dadurch gekennzeichnet,
daß die Anschlußbügel (5) jeweils einen Schenkel (6)
eines senkrecht zur Kettenradachse orientierten Kettengliedes (3) eines durchgehenden Kettenstranges
umfassen und die von den Anschlußbügeln (5) umfaßten Schenkel (6) in jeweils einem am Förderelement
(4) angeordneten Stütz- und Führungsbett (11) ruhen.

2. Kettenförderer nach Anspruch 1, dadurch gekennzeichnet, daß das Stütz- und Führungsbett (11) eine Tiefe
(T) hat, die höchstens gleich der vollen Gliedstärke
(d) des von ihm umfaßten Kettengliedes (3) ist.

3. Kettenförderer nach Anspruch 1 oder 2, dadurch gekennzeichnet, daß das Stütz- und Führungsbett (11)
eine Tiefe (T) hat, die mindestens gleich der halben Gliedstärke (d) des von ihm umfaßten Kettengliedes (3) ist.

4. Kettenförderer nach einem der Ansprüche 1 bis 3,
dadurch gekennzeichnet, daß das Stütz- und Führungsbett (11) für das jeweilige Kettenglied (3) im
Bereich der Mitte des von ihm partiell umfaßten
Schenkels (6) mit einer Aussparung (12) versehen ist.

5. Kettenförderer nach einem der Ansprüche 1 bis 4, dadurch gekennzeichnet, daß das Stütz- und Führungsbett (11) mit mindestens einem den Rundungen des Kettengliedes (3) angepaßten Endbereich versehen ist.

6. Kettenförderer nach Anspruch 5, dadurch gekennzeichnet, daß das Stütz- und Führungsbett (11) sich gegenüberliegende, den Rundungen des Kettengliedes (3) angepaßte Endbereiche aufweist.

7. Kettenförderer nach einem der Ansprüche 1 bis 6, dadurch gekennzeichnet, daß das Stütz- und Führungsbett (11) eine Sicherung gegen Verschiebungen des von ihm umfaßten Schenkels (6) des Kettengliedes (3) bildet.

8. Kettenförderer nach einem der Ansprüche 1 bis 7, dadurch gekennzeichnet, daß das Stütz- und Führungsbett (11) von einem durch den Anschlußbügel (5) lösbar mit dem Förderelement (4) verbundenen Bauteil (10) gebildet wird.

9. Kettenförderer nach Anspruch 7, dadurch gekennzeichnet, daß das Bauteil (10) mit Führungsgabeln (13,13) für den Anschlußbügel (5) versehen ist.

10. Kettenförderer nach Anspruch 8 oder 9, dadurch gekennzeichnet, daß die dem Förderelement (4) zugewandte Grundfläche (15) des Bauteiles (10) leicht konkav ist.

11. Kettenförderer nach einem der Ansprüche 1 bis 10, dadurch gekennzeichnet, daß die Innenrundung des Anschlußbügels (5) mit einer Abflachung (14) versehen ist.

12. Kettenförderer nach einem der Ansprüche 1 bis 11, dadurch gekennzeichnet, daß er als Mehrstrangförderer ausgebildet ist.

13. Kettenförderer nach einem der Ansprüche 1 bis 12, dadurch gekennzeichnet, daß die dem Förderelement (4) zugewandte Fläche des Bauteiles (10) leicht konkav ausgebildet ist.

0193489

Fig.1

Fig.2

Fig.3

Fig.4

Fig.5

Fig.6

Fig.7

Fig.8